# EUROPEAN PATENT APPLICATION

(11) **EP 4 376 113 A1**
(43) Date of publication of application: **29.05.2024**
(21) Application number: 23792035.0
(22) Date of filing: 17.03.2023
(51) Int. Cl.: H01M 4/04, B30B 11/18, B30B 11/20

(54) **DEVICE FOR MANUFACTURING ELECTRODE**

(30) Priority: 20.04.2022 KR 20220049065; 15.03.2023 KR 20230034088
(71) Applicant: LG Energy Solution, Ltd., Seoul 07335 (KR)
(72) Inventor: SO, Ki Han, Daejeon 34122 (KR); CHOY, Sang Hoon, Daejeon 34122 (KR); JEON, Shin Wook, Daejeon 34122 (KR); KO, Youngkuk, Daejeon 34122 (KR); KIM, Donghae, Daejeon 34122 (KR)
(74) Representative: Plasseraud IP
(86) International application number: PCT/KR2023/003624
(87) International publication number: WO 2023/204455

(57) **Abstract**

An electrode manufacturing apparatus according to an embodiment of the present invention includes a support roll supporting an electrode sheet including a coated portion and an uncoated portion and transporting the electrode sheet in a first direction, at least one pressure roll in contact with the support roll with the electrode sheet disposed therebetween and pressurizing the uncoated portion at a position corresponding to the uncoated portion, a level sensor detecting a level of the uncoated portion, and a control unit controlling the pressure roll in response to the level detected by the level sensor, and the at least one pressure roll is movable in a second direction crossing the first direction.

## Description

### [Technical Field]

### CROSS-REFERENCE TO RELATED APPLICATION

This application claims priority to and the benefit of Korean Patent Application No. 1 0-2022-0049065 filed in the Korean Intellectual Property Office on April 20, 2022, and Korean Patent Application No. 10-2023-0034088 filed in the Korean Intellectual Property Office on March 15, 2023, the entire contents of which are incorporated herein by reference.

The present invention relates to an electrode manufacturing apparatus, and more specifically, to an electrode manufacturing apparatus including a system capable of preventing wrinkles of an electrode sheet.

### [Background Art]

As technology development and demand for mobile devices increase, demand for secondary batteries as an energy source has been rapidly increasing. In particular, secondary batteries are of great interest as energy sources for power devices such as electric bicycles, electric vehicles, and hybrid electric vehicles as well as mobile devices such as mobile phones, digital cameras, laptops, and wearable devices.

A secondary battery may be formed by inserting an electrode assembly including a positive electrode, a negative electrode, and a separator into a case and then sealing the case. Here, a secondary battery electrode, such as a positive electrode or a negative electrode, includes a coated portion and an uncoated portion on a current collector. The coated portion has an active material layer coated with an active material slurry, and the uncoated portion is not coated with the active material slurry. In particular, in the case of the uncoated portion, since a thickness of the uncoated portion is very thin, there is a problem that folds or wrinkles may occur in an electrode manufacturing process, and thus, an apparatus capable of controlling this problem is required.

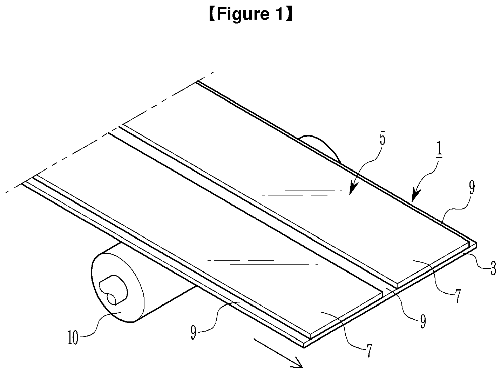

FIG. 1 is a diagram illustrating an electrode support roll and an electrode sheet passing therethrough in an electrode manufacturing apparatus of the related art.

Referring to FIG. 1, an electrode sheet 1 is formed on a metal foil 3, including a coated portion 7 to which an electrode mixture 5 is applied and an uncoated portion 9 to which the electrode mixture 5 is not applied. The electrode sheet 1 is transported to one side by means of at least one roller 10 or is rolled between two rollers 10 and sequentially undergoes corresponding processes.

At this time, while the electrode sheet 1 is supported on the roll 10 and moved and processed, wrinkles, folds, or swells (curls) may occur in the uncoated portion 9 due to a difference in the thickness between the coated portion 7 and the uncoated portion 9. In addition, when the coated portion 7 is coated in a stripe shape and contacts the roll 10 during a process such as drying or applying a tension, folds (wrinkles) may occur in the uncoated portion 9. In particular, since the uncoated portion 9 is a portion where only the metal foil 3 of a thin film exists, the uncoated portion 9 is vulnerable to folds, and furthermore, the occurrence of such wrinkles or folds may further increase in an environment such as high heat according to a position during the process. Such folds and wrinkles cause disconnection and defects, and thus, there is a problem that facility efficiency and productivity decrease due to an increase in the amount of loss.

### [Disclosure]

### [Technical Problem]

The present disclosure attempts to provide an electrode manufacturing apparatus capable of preventing wrinkles from occurring in an uncoated portion of an electrode sheet during an electrode manufacturing process.

The problem to be solved by the present invention is not limited to the above-mentioned problem, and problems not mentioned will be clearly understood by those skilled in the art from the present specification and the accompanying drawings.

### [Technical Solution]

An electrode manufacturing apparatus according to an embodiment of the present invention includes a support roll supporting an electrode sheet including a coated portion and an uncoated portion and transporting the electrode sheet in a first direction, at least one pressure roll in contact with the support roll with the electrode sheet disposed therebetween and pressurizing the uncoated portion at a position corresponding to the uncoated portion, a level sensor detecting a level of the uncoated portion, and a control unit controlling the pressure roll in response to the level detected by the level sensor, and the at least one pressure roll is movable in a second direction crossing the first direction.

The pressure roll may pressurize the uncoated portion by moving to a part where the level of the uncoated portion detected by the level sensor changes.

The pressure roll may move along a support portion extending in the second direction.

The support portion is movable in the first direction.

The control unit may control a height of the pressure roll by reflecting the level of the uncoated portion detected by the level sensor.

A width of the pressure roll may be equal to or greater than a width of the uncoated portion.

The electrode manufacturing apparatus may further include a suction roll supporting the electrode sheet downstream of the support roll in the first direction.

The suction roll may include a plurality of suction holes.

The plurality of suction holes may be arranged in a symmetrical screw shape with respect to the center of the suction roll in a longitudinal direction.

The control unit may control a pressure sucked by a suction connected to the suction roll by reflecting the level of the uncoated portion detected by the level sensor.

### [Advantageous Effects]

According to the embodiments, even if wrinkles occur in the uncoated portion of the electrode sheet during the electrode manufacturing process, the wrinkles may be quickly removed, and a state in which the wrinkles are removed may be maintained, thereby preventing defects from occurring due to wrinkles and folds in the uncoated portion.

The effects of the present invention are not limited to the above-mentioned effects, and effects not mentioned will be clearly understood by those skilled in the art from the present specification and the accompanying drawings.

### [Description of the Drawings]

FIG. 1 is a diagram illustrating an electrode support roll and an electrode sheet passing therethrough in an electrode manufacturing apparatus of the related art.
FIG. 2 is a diagram schematically illustrating an electrode manufacturing apparatus according to an embodiment of the present invention.
FIG. 3 is a diagram illustrating a part of the electrode manufacturing apparatus of FIG. 2.
FIG. 4 is an enlarged cross-sectional view for explaining a part of the electrode manufacturing apparatus of FIG. 2 pressurizing an uncoated portion.
FIG. 5 is a diagram illustrating a suction roll of the electrode manufacturing apparatus of FIG. 2.

### [Mode for Invention]

The present invention will be described more fully hereinafter with reference to the accompanying drawings, so that those skilled in the art to which the present invention pertains may easily implement the embodiments of the present invention. However, the present invention may be implemented in many different forms and is not limited to the embodiments described herein.

In order to clearly describe the present invention, parts irrelevant to the description are omitted, and the same reference numerals are denoted by the same or similar components throughout the specification.

In addition, since the size and thickness of each component shown in the drawings are arbitrarily shown for convenience of explanation, the present invention is not necessarily limited to those as shown. In the drawings, the thickness is shown enlarged to clearly express the various layers and regions. Also, in the drawings, for convenience of explanation, the thicknesses of some layers and regions are exaggerated.

In addition, throughout the specification, when a portion "includes" a certain component, it means that the portion may further include other components without excluding other components unless otherwise stated.

In addition, throughout the specification, when it is referred to as "on a plane", it means when the target portion is viewed from above, and when it is referred to as "on a cross-section", it means when a cross section of the target portion cut vertically is viewed from the side.

Hereinafter, an electrode manufacturing apparatus according to an embodiment of the present invention will be described. However, some process sections of a part of the electrode manufacturing apparatus to which the present invention is applied will be described as an example, but the present invention is not necessarily limited thereto, and the technical idea of the present invention may be applied to any process in which the technical problem recognized in the present invention occurs when an electrode sheet is manufactured. In addition, in the description, an electrode will be described with respect to an upper surface of upper and lower surfaces of a current collector, but is not necessarily limited thereto, and may be described in the same or similar manner even in the case of the lower surface.

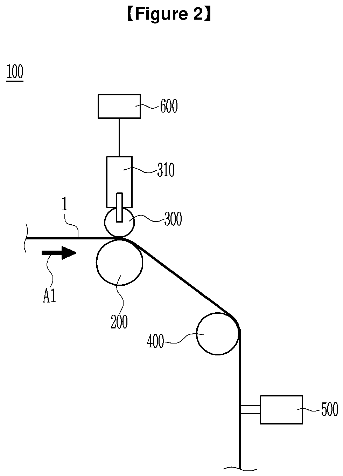

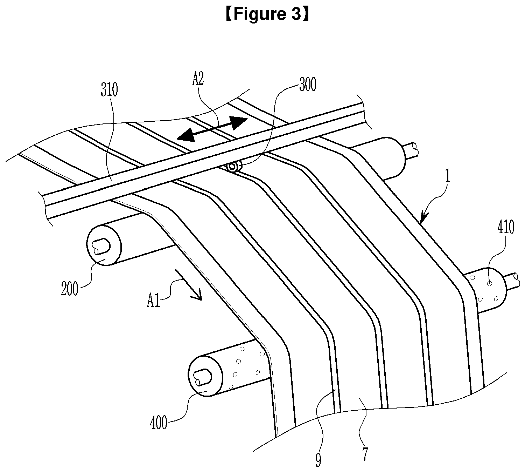

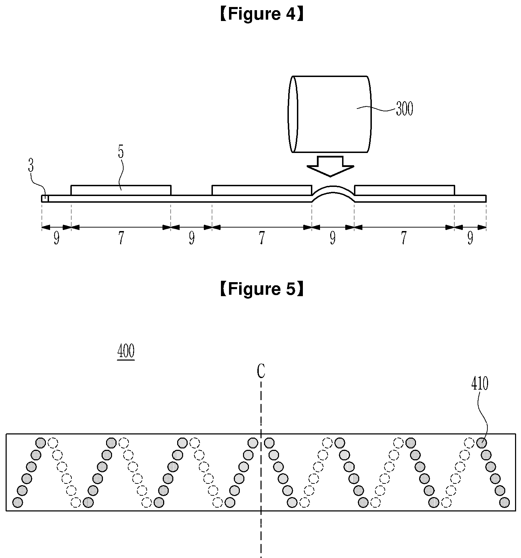

FIG. 2 is a diagram schematically illustrating an electrode manufacturing apparatus according to an embodiment of the present invention. FIG. 3 is a diagram illustrating a part of the electrode manufacturing apparatus of FIG. 2. FIG. 4 is an enlarged cross-sectional view for explaining a part of the electrode manufacturing apparatus of FIG. 2 pressurizing an uncoated portion.

Referring to FIGS. 2 to 4, an electrode manufacturing apparatus 100 according to an embodiment of the present invention includes a support roll 200 supporting an electrode sheet 1 and transporting the electrode sheet 1 in a first direction A1, a pressure roll 300 in contact with the support roll 200 with the electrode sheet 1 disposed therebetween, a level sensor 500 detecting a level of an uncoated portion 9 of the electrode sheet 1, and a control unit 600 controlling the pressure roll 300 in response to the level detected by the level sensor 500.

The support roll 200 serves to support and transport the electrode sheet 1 in a state in which an electrode mixture 5 is applied, on a metal foil 3. The support roll 200 may be applied to a transfer roll, a rolling roll, a slitter, etc. during an electrode manufacturing process, and any roll that serves to support the electrode sheet 1 may be applied without limitation.

Referring to FIG. 4, the electrode sheet 1 may be formed on the metal foil 3, including a coated portion 7 to which the electrode mixture 5 is applied and the uncoated portion 9 to which the electrode mixture 5 is not applied. In particular, the coated portions 7 may be formed in a stripe shape, and a plurality of uncoated portions 9 may be formed between the coated portions 7. The uncoated portion 9 is a portion where the electrode mixture 5 is not formed and only the metal foil 3 is positioned. Therefore, the uncoated portion 9 is vulnerable to folds, and when exposed to an environment such as high heat according to a position during a process, the occurrence of wrinkles, folds, or swells (curls) may further increase. Therefore, it is necessary to prevent such wrinkles, folds or swells from occurring.

To this end, the electrode manufacturing apparatus 100 of the present embodiment includes the pressure roll 300 and the level sensor 500. The pressure roll 300 is positioned in contact with the support roll 200 with the electrode sheet 1 disposed therebetween, and, in particular, as a configuration for pressurizing the uncoated portion 9 in correspondence to the uncoated portion 9, is formed to have a smaller width than the support roll 200. Preferably, the width of the pressure roll 300 may be formed in correspondence to a width of the uncoated portion 9, but is not limited thereto, and may be formed slightly greater than the width of the uncoated portion 9.

The pressure roll 300 may be supported by a support portion 310 in the shape of a bar extending in a second direction A2 crossing the first direction A1, which is a direction in which the electrode sheet 1 travels, and may be formed to be movable across the second direction A2, that is, a width direction of the electrode sheet 1, along the support portion 310. According to such a configuration, the pressure roll 300 moves to a position corresponding to the uncoated portion 9 where wrinkles, folds, or swells occur, and pressurizes the uncoated portion 9 so that the wrinkles, folds, or swells are flattened. Referring to FIG. 4, since only the metal foil 3 of a thin film exists in the uncoated portion 9 positioned between the coated portions 7, folds may easily occur as shown in FIG. 4. By pressurizing only the corresponding part with the pressure roll 300, folds may be unfolded without damage to the coated portion 7, and thus, the occurrence of defects may be prevented. In addition, in the present embodiment, since the pressure roll 300 is configured to be movable in the second direction A2, even if the position of the uncoated portion 9 is plural or the position of the uncoated portion 9 is changed according to a change in a width of the coated portion 7, the pressure roll 300 is capable of moving to a part where a fold occurs and unfolding the fold regardless of this.

Meanwhile, the support portion 310 itself is also movable in the first direction A1. That is, the pressure roll 300 moves in the second direction A2 along the support portion 310 or the support portion 310 moves in the first direction A1 so that the part where wrinkles or folds occur is detected and the pressure roll 300 is accurately positioned in correspondence to the corresponding position. In addition, in the present embodiment, it has been described that the pressure roll 300 is supported by the support portion 310 in the shape of the bar as an example, but the pressure roll 300 is not limited thereto, and the pressure roll 300 itself may be connected to a robot arm, etc. and configured to move to the part where wrinkles or folds occur.

The level sensor 500 is a configuration for detecting a level of the uncoated portion 9, and may be disposed downstream of a traveling direction of the electrode sheet 1 as shown in FIG. 2, but is not limited thereto, and may be positioned upstream of the pressure roll 300. The level sensor 500 may detect the level of the uncoated portion 9 by irradiating, for example, a laser, but is not limited thereto, and various sensors capable of detecting the level may be applied. Upon measuring the level of the uncoated portion 9 by the level sensor 500, when it is determined that a previously input value (e.g., a level (height) in a state in which the metal foil 3 is in close contact with the support roll 200), it is determined that folds, wrinkles, or swells have occurred in the corresponding part. Subsequently, the pressure roll 300 moves to a position corresponding to the uncoated portion 9 where wrinkles, folds, or swells occur, and pressurizes the uncoated portion 9 so that the wrinkles, folds, or swells are flattened.

At this time, the height of the pressure roll 300 may be adjusted according to the level measured by the level sensor 500. That is, when a level increase is large, a pressure applied while the pressure roll 300 is in contact with the uncoated portion 9 may be increased by reducing the height of the pressure roll 300, and when the level increase is small, the pressure applied while the pressure roll 300 is in contact with the uncoated portion 9 may be reduced by increasing the height of the pressure roll 300. Alternatively, an elastic member (not shown) may be provided between the pressure roll 300 and the support 310 to control an appropriate pressure to be applied by elasticity of the elastic member.

As described above, a suction roll 400 supporting the electrode sheet 1 downstream of the support roll 200 in the first direction A1 may be further included so that the electrode sheet 1 maintains a tight state by applying tension to the electrode sheet 1 in the state where wrinkles, folds, or swells are flattened by the pressure roll 200. FIG. 5 is a diagram illustrating the suction roll 400 of the electrode manufacturing apparatus of FIG. 2. Referring to FIG. 5, a plurality of suction holes 410 are formed in a surface of the suction roll 400, and the inside of the suction roll 400 is connected to a suction apparatus (not shown) and is configured to be capable of sucking the electrode sheet 1 in contact with the surface through the suction holes 410.

As shown in FIG. 5, the plurality of suction holes 410 may be formed to surround, in a screw shape, the surface of the suction roll 400 in a cylindrical shape, and, in particular, may be formed to have a symmetrical shape with respect to a center C of the suction roll 400 in a longitudinal direction. According to such a configuration, since a force sucked by the suction hole 410 is symmetrically applied toward the outside of the electrode sheet 1, tension is applied to the electrode sheet 1 to maintain a tight state. Therefore, it is possible to prevent wrinkles, folds, or swells from additionally occurring in a state in which wrinkles, folds, or swells of the uncoated portion 9 are flattened by the pressure roll 300. In addition, it is possible to prevent the electrode sheet 1 from being biased to one side and meandering.

A suction pressure of the suction roll 400 may be adjusted according to the number of level change parts detected by the level sensor 500. That is, when wrinkles, folds, or swells occur in various parts of the uncoated portion 9, suction is performed with a stronger pressure so that wrinkles, folds, or swells may be prevented, and when the number of parts where wrinkles, folds, or swells occur is small, the suction pressure may be controlled to decrease.

As described above, according to the embodiment of the present invention, even in the electrode sheet 1 in which the coated portion 7 and the uncoated portion 9 exist together, wrinkles, folds, or swells of the uncoated portion 9 may be prevented, thereby preventing defects or disconnection caused by wrinkles, folds, or swells. The configurations of the pressure roll 300, the suction roll 400, and the level sensor 500 included in the electrode manufacturing apparatus of the present embodiment may be applied in various processes during the entire electrode manufacturing process. In particular, since wrinkles, folds, or swells of the uncoated portion 9 are more likely to occur in an environment of a high temperature, when the apparatus of the present embodiment is applied to an outlet of an oven that has undergone a drying process of the high temperature, the configurations may be more usefully applicable.

Although the embodiments of the present invention have been described in detail above, the scope of the present invention is not limited thereto, and various modifications and improvements made by those of ordinary skill in the field to which the present invention pertains also belong to the scope of the present invention.

### < Description of Reference Numerals>

1: electrode sheet
3: metal foil
5: electrode mixture
7: coated portion
9: uncoated portion
100: electrode manufacturing apparatus
200: support roll
300: pressure roll
310: support portion
400: suction roll
410: suction hole
500: level sensor
600: control unit

## Claims

1. An electrode manufacturing apparatus comprising:
a support roll supporting an electrode sheet including a coated portion and an uncoated portion and transporting the electrode sheet in a first direction;
at least one pressure roll in contact with the support roll with the electrode sheet disposed therebetween and pressurizing the uncoated portion at a position corresponding to the uncoated portion;
a level sensor detecting a level of the uncoated portion; and
a control unit controlling the pressure roll in response to the level detected by the level sensor,
the at least one pressure roll is movable in a second direction crossing the first direction.

2. The electrode manufacturing apparatus of claim 1, wherein:
the pressure roll pressurizes the uncoated portion by moving to a part where the level of the uncoated portion detected by the level sensor changes.

3. The electrode manufacturing apparatus of claim 1, wherein:
the pressure roll moves along a support portion extending in the second direction.

4. The electrode manufacturing apparatus of claim 3, wherein:
the support portion is movable in the first direction.

5. The electrode manufacturing apparatus of claim 1, wherein:
the control unit controls a height of the pressure roll by reflecting the level of the uncoated portion detected by the level sensor.

6. The electrode manufacturing apparatus of claim 1, wherein:
a width of the pressure roll is equal to or greater than a width of the uncoated portion.

7. The electrode manufacturing apparatus of claim 1, further comprising:
a suction roll supporting the electrode sheet downstream of the support roll in the first direction.

8. The electrode manufacturing apparatus of claim 7, wherein:
the suction roll includes a plurality of suction holes.

9. The electrode manufacturing apparatus of claim 8, wherein:
the plurality of suction holes are arranged in a symmetrical screw shape with respect to a center of the suction roll in a longitudinal direction.

10. The electrode manufacturing apparatus of claim 7, wherein:
the control unit controls a pressure sucked by a suction connected to the suction roll by reflecting the level of the uncoated portion detected by the level sensor.
